# EUROPÄISCHE PATENTSCHRIFT

(11) **EP 1 762 865 B1**
(45) Veröffentlichungstag und Bekanntmachung des Hinweises auf die Patenterteilung: **14.01.2009**
(21) Anmeldenummer: 06018531.1
(22) Anmeldetag: 05.09.2006
(51) Int. Cl.: G02B 5/04, G02B 27/64

(54) **Optisches Element zur Verbesserung einer Laser-Strahllage**
Optical element for improving the position of a laser beam
Élément optique pour l'amélioration de la position d'un rayon laser

(30) Priorität: 07.09.2005 DE 102005042636
(43) Veröffentlichungstag der Anmeldung: 14.03.2007
(73) Patentinhaber: Prüftechnik Dieter Busch AG, 85737 Ismaning (DE)
(72) Erfinder: Lysen, Heinrich, 85748 Garching (DE)

(56) Entgegenhaltungen:
- EP-A1- 0 366 150
- EP-A2- 0 959 326
- CH-A- 356 921
- DE-A1- 4 132 025
- DE-B- 1 196 394
- US-A- 2 055 684
- US-A- 3 424 516
- US-A- 5 671 004
- US-B1- 6 253 457

## Beschreibung

Die vorliegende Erfindung betrifft ein optisches Element mit Korrekturwirkung für Laserstrahlen wie es z.B. in einem Vermessungsgerät verwendet werden kann,

Eine Erfindung der gattungsgemäßen Art ist bekannt aus der US 6,253,457 Erf. Ohtomo et.al. In dieser Schrift wird erläutert, wie der Austritt eines Laserstrahls parallel zur Erdoberfläche gehalten werden kann und zu diesem Zweck ein optisches Korrektursystem verwendet wird, um das gewünschte Resultat im Hinblick auf eine aus einem Pentaprisma austretende Strahlrichtung zu verbessern.

In der US 5,671,004 und der EP 0 959 326 A2 wird ein Pentaprisma mit einem Linsensystem kombiniert, um die Strahllage zu des austretenden Strahls zu verbessern. In der DE 41 32 025 A1 werden in einer Vorrichtung zur Ablenkung eines Lichtstrahls um 90° zwei Prismen kombiniert. In der EP 0 366 150 A1 wird eine planparallele Platte in ihrer Winkelstellung verändert, um einen Strahlversatz auszugleichen.

Der vorliegenden Erfindung liegt eine ähnliche Aufgabe zugrunde, Anstelle der Korrektur einer Strahlrichtung soll jedoch der Austrittsort an einem umlenkenden optischen Element, insbesondere an einem rechtwinklig umlenkenden optischen Element, verbessert werden so daß eine Variation in Abhängigkeit von einem Laserstrahl-Einfallswinkel minimiert wird.

Insbesondere ist es Aufgabe der Erfindung, den Austrittsort bei einem als Pentaprisma wirkenden optischen Element weitestgehend konstant zu halten, unabhängig von einer Einstrahlrichtung eines Laserstrahles auf ein solches optisches Element.

Diese Aufgabe wird gelöst durch eine Vorrichtung nach Maßgabe der unabhängigen Patentansprüche. Die Grundidee der Erfindung besteht darin, vor einem herkömmlichen Pentaprisma ein optisches Element anzubringen, welches einen drehwinkelabhängigen Parallelversatz erzeugt, welcher gerade so groß ist, dass der dem Pentaprisma eigene winkelabhängige Versatz kompensiert wird.

Die Erfindung wird im folgenden anhand der Zeichnungen erläutert.

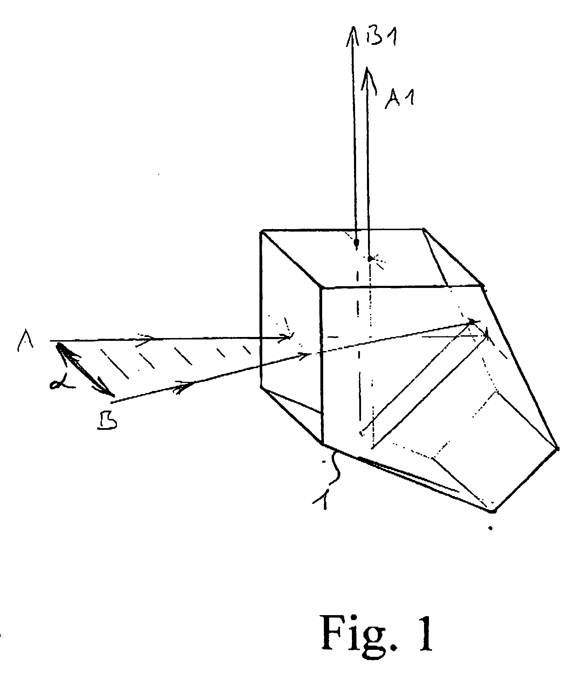

Gemäß Fig. 1, welche den Stand der Technik wiedergibt, ergibt sich bei einem herkömmlichen Pentaprisma folgendes Problem: Ein ideal senkrecht auftreffender Laserstrahl A wird durch das Pentaprisma um 90° umgelenkt und tritt als Strahl A1 wie gezeigt nach oben aus. - Wird das Pentaprisma um einen Winkel "alpha" um eine Achse gedreht, welche mit dem Strahl A1 koinzidiert, so wird die Strahllage des einfallenden Strahls B relativ zum Pentaprisma verändert. Obwohl weiterhin rechtwinklige Ablenkung für Strahl B stattfindet, ergibt sich ein relativ zu Strahl A1 versetzter Austrittsstrahl B1, auch wenn Strahlen A1 und B1 parallel sind. Gemäß der Erfindung ist es jedoch möglich, trotz einer Drehung des optischen Elementes um einen Drehwinkel den Austrittsort eines austretenden Laserstrahls praktisch konstant zu halten. Gleichzeitig bleibt die Eigenschaft gewahrt, dass eintretende und austretende Laserstrahlen rechtwinklig zueinander orientiert sind.

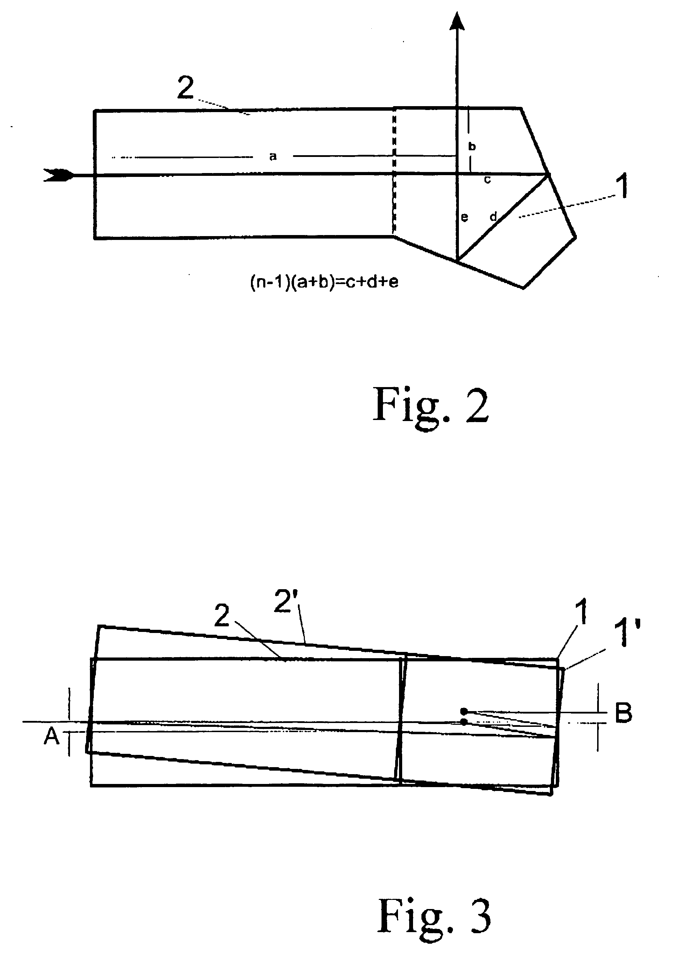

In Fig. 2 wird eine erfindungsgemäße Lösung dargestellt. Ein Pentaprisma 1 wird mit einem transparenten und mit planen Ein- und Austrittsflächen versehenen optischen Vorsatzblock 2 kombiniert. Der Vorsatzblock 2 hat dabei typischerweise eine größere Längsabmessung als das Pentaprisma 1 und steht wie in Fig. 2 gezeigt mit dem Pentaprisma 1 in direktem optischen Kontakt, oder ist zusammen mit diesem als einstückige Anordnung ausgeführt. Die Längsabmessung des Vorsatzblockes wird dabei anhand dessen optischer Dichte errrechnet und genau vorgegeben, um das gewünschte Korrekturresultat zu erhalten. Gemäß den eingezeichneten Dimensionen gilt dabei die Formel (n-1)*(a+b)⁻ c + d + e

Auf diese Weise kann eine erfindungsgemässe Vorrichtung aus optisch transparenten Materialien mit nahezu beliebigem Brechungsindex n gefertigt werden, insbesondere solchen mit einem Brechungsindex von n= 1,5 oder aus handelsüblichen Glassorten.

Fig. 3 erläutert, wie durch den Vorsatzblock bei schräg einfallenden Laserstrahlen eine Brechung in Richtung des Einfallslotes stattfindet und die Länge des Vorsatzblockes gerade so gewählt ist, daß unabhängig vom horizontalen Einfallswinkel sich der Ort des Strahlaustrittes nicht ändert. - Auch bei vertikal schräg einfallenden Laserstrahlen ändert sich dieser Ort praktisch nicht, obwohl Ein- und Austrittswinkel weiterhin rechtwinklig zueinander stehen.

Die Erfindung eignet sich insbesondere für Vermessungszwecke an Werkzeugmaschinen und wird dort bevorzugt verwendet.

## Patentansprüche

1. Optisches Element zum Umlenken von Lichtstrahlen um 90°, mit einer Korrektureinrichtung zur Verbesserung der Relativlage von einfallenden und ausfallenden Lichtstrahlen, **gekennzeichnet durch** die Kombination eines herkömmlichen Pentaprismas (1) mit mindestens einem relativ zu diesem fest angebrachten transparenten Glasblock (2) mit planparallelen Ein- und Austrittflächen, wobei ein drehwinkelabhängiger Parallelversatz zwischen einem auf den Glasblock einfallendem und ausfallendem Lichtstrahl gerade entgegengesetzt so groß ist wie ein existierender drehwinkelabhängiger Parallelversatz für auf das Pentaprisma regulär einfallende Lichtstrahlen.

2. Optisches Element nach Anspruch 1, **dadurch gekennzeichnet, dass** der mindestens eine Glasblock (2) mittels einer Kittung oder einer Klebung direkt mit dem Pentaprisma (1) verbunden ist.

3. Optisches Element nach einem der vorhergehenden Ansprüche, wobei die Länge des mindestens einen Glasblocks (2) nach Maßgabe von dessen Brechungsindex gewählt wird.

## Claims

1. Optical element for deflecting light beams by 90°, having a correction device for improving the relative position of incident and outgoing light beams, **characterized by** the combination of a conventional pentaprism (1) having at least one transparent glass block (2) which is fixed relative to the latter and has plane-parallel entry and exit faces, wherein an angle of rotation-dependent parallel offset between a light beam which is incident on the glass block and one that is outgoing is exactly opposite and as large as an existing angle of rotation-dependent parallel offset for light beams which are regularly incident on the pentaprism.

2. Optical element according to Claim 1, **characterized in that** the at least one glass block (2) is directly connected to the pentaprism (1) by way of cementing or adhesive bonding.

3. Optical element according to either of the preceding claims, wherein the length of the at least one glass block (2) is selected depending on its refractive index.

## Revendications

1. Élément optique pour la déviation de rayons lumineux de 90°, avec un dispositif de correction pour l'amélioration de la position relative de rayons lumineux incidents et émergeants, **caractérisé par** la combinaison d'un pentaprisme traditionnel (1) avec au moins un bloc de verre transparent (2) solidement fixé à celui-ci et ayant des surfaces plan parallèles d'entrée et de sortie, dans lequel un décalage parallèle dépendant de l'angle de rotation, entre un faisceau lumineux incident sur le bloc de verre et émergeant du bloc de verre, a une grandeur exactement opposée à un décalage parallèle dépendant de l'angle de rotation existant pour des rayons lumineux incidents tombant normalement sur le pentaprisme.

2. Élément optique selon la revendication 1, **caractérisé en ce qu'**au moins ce bloc de verre (2) est relié directement au pentaprisme (1) au moyen d'un mastiquage ou d'un collage.

3. Élément optique selon une des revendications précédentes, dans lequel la longueur d'au moins ce bloc de verre (2) est choisie en fonction de son indice de réfraction.
